# FASCICULE DE BREVET EUROPEEN

(11) **EP 0 534 809 B1**
(45) Date de publication et mention de la délivrance du brevet: **25.09.1996**
(21) Numéro de dépôt: 92402143.9
(22) Date de dépôt: 24.07.1992
(51) Int. Cl.: G01N 25/60, A47J 39/00, A21B 3/04, A47J 27/16

(54) **Procédé et dispositif de détection de vapeur d'eau dans un volume d'air et générateur de vapeur et four de cuisson à la vapeur utilisant ceux-ci**
Verfahren und Vorrichtung zum Nachweis von Wasserdampf in einem Luftvolumen und Dampferzeuger und Dampfofen welche diese benützen
Method and apparatus for detecting water vapour in an air volume and a vapour generator and steam oven using these

(30) Priorité: 26.07.1991 FR 9109527
(43) Date de publication de la demande: 31.03.1993
(73) Titulaire: C O G I A Société Anonyme, F-91893 Orsay (FR)
(72) Inventeur: Carron, Didier, F-94100 Saint-Maur des Fossés (FR); Deblay Philippe, F-92290 Chatenay-Malabry (FR); Desage, Robert, F-78480 Verneuil Sur Seine (FR)
(74) Mandataire: Bruder, Michel

(56) Documents cités:
- EP-A- 0 188 714
- EP-A- 0 335 796
- CH-A- 434 798
- CH-A- 670 515
- GB-A- 1 335 168
- GB-A- 2 207 514
- US-A- 4 376 131
- US-A- 4 911 357

## Description

La présente invention concerne un procédé et un dispositif de détection, dans un volume d'air à une température donnée, de la présence de vapeur d'eau à la même température.

La présente invention concerne également l'application de ce procédé et de ce dispositif d'une part à la mise en oeuvre de générateurs de vapeur d'eau, fonctionnant de préférence à la pression atmosphérique, pour leur conférer une réponse quasi-instantanée et, d'autre part, au contrôle de la fourniture de vapeur d'eau, par un générateur de vapeur, à des fours de cuisson à la vapeur d'eau sous pression atmosphérique.

La présente invention concerne également un procédé et un dispositif destinés à déterminer le pourcentage de vapeur d'eau, à une température donnée, éventuellement contenue dans une masse d'air à la même température.

On sait que la vapeur d'eau intervient dans de nombreuses applications, tant ménagères qu'artisanales et industrielles, où il est essentiel de réaliser une détection spécifique de la vapeur d'eau, c'est-à-dire de distinguer de la vapeur d'eau à une température donnée de l'air à la même température. Un tel moyen peut, par exemple, être utilisé pour veiller au bon et constant remplissage en vapeur d'eau d'une enceinte, qui peut être ou non thermostatée, ou encore par exemple, pour détecter le début de la production effective de vapeur d'eau d'un générateur de vapeur, après une période de préchauffage, ou encore, par exemple, pour signaler, dans une conduite, toute brusque irruption de vapeur d'eau, par exemple pour des raisons de sécurité.

On sait que l'utilisation classique, à poste fixe, d'un capteur de température pour distinguer la vapeur d'eau de l'air est impossible, puisque ces capteurs ont justement pour mission d'indiquer la température indépendamment de la nature du gaz.

Il est possible, par contre, à cette fin, d'utiliser l'un des nombreux appareils ou dispositifs de mesure du degré d'humidité d'un gaz, disponibles sur le marché. Ces appareils et dispositifs, principalement des hygromètres et des psychromètres, utilisent des principes physiques variés, à savoir dilatation d'un cheveu, changement de capacité d'un polymère hygroscopique possédant une constante diélectrique élevée, mesure de la résistivité électrique, différence de température entre un bulbe sec et un bulbe humide, refroidissement et recherche du point de rosée, etc... Ces techniques peuvent fournir avec précision la valeur du pourcentage d'humidité d'un matériau, et pour la plupart d'entre elles d'un gaz.

Néanmoins, les appareils actuellement disponibles, qui fournissent plus qu'une détection de vapeur d'eau, puisqu'ils fournissent une valeur approchée du degré hygrométrique, sont relativement onéreux et sophistiqués. Par ailleurs, la plupart des hygromètres et psychromètres ne fonctionnent qu'à relativement basse température, généralement en dessous de 60°C, et seuls les appareils les plus onéreux fonctionnent correctement au-delà de 100°C. Certains appareils, tels que ceux mettant en oeuvre la technique du bulbe sec et du bulbe humide, nécessitent une réalimentation constante de l'appareil en eau, d'une quantité correspondant exactement à la quantité évaporée, et sont donc d'une mise en oeuvre délicate.

Lorsque les applications précédemment mentionnées comportent l'établissement d'un flux de vapeur d'eau, on pourrait envisager de détecter celui-ci au moyen d'appareils de mesure des flux gazeux, tels que des débitmètres. Or ces derniers ne font pas de distinction entre l'air et la vapeur d'eau et ne peuvent donc permettre une détection spécifique d'un flux de vapeur d'eau, par opposition à un flux d'air.

On a proposé dans le brevet EP-A-0 188 714 un dispositif destiné à assurer le contrôle des moyens de chauffage d'une enceinte de cuisson fonctionnant à la vapeur d'eau sous pression, apparemment de type autocuiseur sous pression, constitué d'un capteur qui mesure la température existant à l'intérieur de cette enceinte. Un tel capteur, en raison de sa disposition à l'intérieur de cette enceinte close qui contient un mélange d'air et de vapeur d'eau ne réagit, ainsi que cela est souhaité dans ce type de dispositif, qu'en fonction de la température d'air et de vapeur d'eau existant à l'intérieur de l'enceinte. Un tel dispositif n'est ainsi pas en mesure d'assurer la détection de la vapeur d'eau.

On a également proposé dans un brevet GB-A-2 707 514 un dispositif destiné à mesurer le taux d'humidité existant dans un four de cuisson, et en particulier un four de boulangerie. Un tel dispositif est essentiellement constitué d'une plaque sur la face interne de laquelle est disposé un capteur de température, cette plaque constituant le couvercle d'un boîtier étanche à l'atmosphère du four. La plaque est refroidie, en permanence, par des moyens de refroidissement constitués d'un courant d'air comprimé. Un tel dispositif est à la fois particulièrement volumineux et compliqué dans la mesure où il nécessite la présence d'une plaque spécifique ainsi que des moyens de refroidissement qui font appel à une technique externe au four particulièrement complexe.

On ne connaît donc pas de moyens de détection spécifique de la vapeur d'eau, qui soient à la fois simples, robustes, faciles à mettre en oeuvre et peu onéreux.

La présente invention a pour but de proposer un procédé et un dispositif de détection spécifique de vapeur d'eau, éventuellement surchauffée au delà de la température d'ébullition de l'eau à la pression atmosphérique, qui soit particulièrement simple à mettre en oeuvre.

La présente invention a ainsi pour objet un procédé de détection, dans un volume d'air à une température donnée, de la présence de vapeur d'eau, caractérisé en ce qu'il comporte les étapes consistant à :
- mettre en présence dudit volume d'air au moins un capteur de température présentant deux temps de montée en température respectifs, à savoir un temps de montée en température dit "sous vapeur d'eau" et un temps de montée en température dit "sous air", tels qu'ils lui permettent d'atteindre, une température de consigne déterminée, inférieure à ladite température donnée, lorsqu'il se trouve respectivement en présence de vapeur d'eau et en présence d'air, le capteur étant mis en présence dudit volume
- soit dans une zone apte à subir une perte thermique telle que lorsque ledit volume d'air est exempt de vapeur d'eau, le capteur de température n'atteint pas la température de consigne et lorsque ledit volume d'air contient une proportion de vapeur d'eau déterminée, ou proportion critique, le capteur de température atteint ladite température de consigne,
- soit pendant un temps inférieur au temps de montée "sous air" et au moins égal au temps de montée "sous vapeur",
- effectuer une mesure de température, et
- déterminer si la température mesurée atteint ou non la susdite température de consigne, de façon à indiquer si le capteur se trouve ou non en présence de vapeur d'eau.

La présente invention a également pour objet un dispositif de détection, dans un volume d'air à une température donnée, de la présence de vapeur d'eau caractérisé en ce qu'il comporte:
- au moins un capteur de température présentant deux temps de montée en température respectifs, à savoir un temps de montée en température, dit "sous vapeur d'eau", et un temps de montée en température dit "sous air", tels qu'ils lui permettent d'atteindre une température de consigne déterminée inférieure à ladite température donnée, lorsqu'il se trouve respectivement en présence de vapeur d'eau et en présence d'air,
- soit des moyens aptes à créer, au voisinage du capteur de température, une zone soumise à une perte thermique telle que, lorsque le flux d'air est exempt de vapeur d'eau et vient en contact avec le capteur de température, celui-ci n'atteint pas la température de consigne et lorsque le flux d'air contient une proportion de vapeur d'eau déterminée, ou proportion critique, le capteur de température atteint ladite température de consigne,
- soit des moyens pour mettre le capteur de température en présence dudit volume pendant un temps inférieur au temps de montée "sous air" et au moins égal au temps de montée "sous vapeur",
- des moyens pour effectuer une mesure de température,
- des moyens pour déterminer si la température mesurée atteint ou non la susdite température de consigne, de façon à indiquer si le capteur se trouve ou non en présence de vapeur d'eau.

Ainsi qu'exposé ci-après le procédé et le dispositif de détection de vapeur d'eau suivant l'invention sont basés sur des essais réalisés par la demanderesse, qui lui ont permis de constater que la montée en température de capteurs de température, mis au contact d'une atmosphère de vapeur à une température donnée, était beaucoup plus rapide que lorsque ces mêmes capteurs étaient mis au contact d'une atmosphère constituée d'air à la même température. Les essais ont montré que le rapport des temps mis pour atteindre une température de consigne déterminée, respectivement sous atmosphère de vapeur et sous atmosphère d'air, pouvait atteindre une valeur de dix.

La demanderesse a également établi que, bien que ce rapport varie suivant le type du capteur de température utilisé, le temps de montée en température de celui-ci était cependant plus court la plupart du temps (à température d'air et de vapeur égales), lorsqu'il était mis au contact de la vapeur, que lorsqu'il était mis au contact de l'air.

Dans le procédé et le dispositif selon l'invention, le capteur de température peut être de tout type. On peut ainsi utiliser, notamment, une lame bimétallique, qui présente l'avantage d'un coût très faible, mais qui possède une inertie relativement importante. On peut également utiliser des capteurs plus précis et à faible inertie, tels que des thermocouples, des sondes fer-nickel, des sondes platine, des varistances, des résistances à coefficient de température positif ou négatif, ou tout autre capteur de température.

En conséquence il est donc possible, par l'examen du temps de montée en température d'un capteur quelconque, c'est-à-dire du temps qui lui est nécessaire pour, à partir d'une température donnée, atteindre une température de consigne déterminée, de différencier l'air de la vapeur d'eau, à une même température, mais aussi à des températures nettement différentes, et, notamment, lorsque la température de l'air est supérieure à celle de la vapeur, ainsi qu'il sera démontré ci-après.

On peut également utiliser un capteur du même type d'une autre façon pour réaliser la détection de vapeur. On a ainsi constaté que lorsqu'un capteur de température est placé dans un milieu parcouru par un flux de vapeur d'eau et/ou par un flux d'air qui est soumis à des pertes thermiques, les temps de montée en température, en présence respectivement de vapeur et d'air, sont particulièrement contrastés puisque, ainsi que montré ci-après, il peuvent alors se situer dans des rapports pouvant aller jusqu'à 20. Ceci permet d'accroître la différence de comportement du capteur selon qu'il est mis en présence d'un flux de vapeur d'eau ou d'un flux d'air et permet donc d'affiner la précision de la détection.

Par ailleurs on a constaté que lorsque des pertes thermiques sont créées, les pertes thermiques subies par l'air sont supérieures, en valeur relative, à celles subies par la vapeur. De ce fait, la température de l'air s'abaisse plus que celle de la vapeur. La température atteinte, au bout d'un temps "infini" par le capteur, lorsque l'air est exempt de vapeur est donc inférieure à celle atteinte lorsque l'air contient de la vapeur. La détection de vapeur peut alors s'effectuer, non seulement comme évoqué précédemment, par un examen de la courbe de montée en température, mais aussi par un examen, même au bout d'un temps quelconque, de la température relevée par le capteur. Par comparaison de cette température avec les valeurs obtenues par un étalonnage préalable, on peut ainsi déterminer la présence ou non de vapeur dans le gaz. Le capteur peut être placé dans tout espace soumis à des pertes thermiques, parcouru par le flux de gaz (vapeur d'eau et/ou air), les pertes thermiques ainsi créées permettant d'abaisser la température de l'air plus rapidement que celle de la vapeur d'eau.

Cet espace peut être constitué par exemple d'un tube, ou de toute conduite de toute forme, ou encore plus simplement par l'air ambiant lui-même. En jouant sur l'emplacement du capteur et sur l'importance des pertes thermiques, il est possible de mettre en oeuvre le dispositif selon l'invention même si, par exemple, la température de l'air est supérieure à celle de la vapeur d'eau. Il est également possible de mettre ce dispositif en oeuvre même lorsque, après une première mise en contact, le capteur reste en présence de l'air ou de la vapeur d'eau. En effet, dans ce dernier cas, il est possible de positionner le capteur de façon que la température d'équilibre du capteur dans l'air soit inférieure à celle du capteur dans la vapeur d'eau, et donc de choisir le franchissement de la température maximale dans l'air comme point d'observation et critère de détection de vapeur d'eau.

La présente invention concerne également les applications du procédé et du dispositif suivant l'invention. Elle a notamment pour but de proposer, d'une part, un générateur de vapeur d'eau présentant une réponse quasi-instantanée et, d'autre part, un four de cuisson à la vapeur d'eau pourvu de moyens de contrôle de la quantité de vapeur fournie à l'enceinte de cuisson dudit four.

Elle a ainsi pour objet un générateur de vapeur d'eau comprenant une enceinte dans laquelle on stocke de l'eau à vaporiser, des moyens de vaporisation aptes à porter à l'ébullition l'eau contenue dans l'enceinte et à délivrer, en sortie de celle-ci, un flux de gaz constitué de vapeur d'eau et/ou d'air, caractérisé en ce qu'il comporte:
- au moins un capteur de température disposé sur le trajet de sortie du flux de vapeur, le capteur de température possédant deux temps de montée en température respectifs à savoir un temps de montée en température dit "sous vapeur d'eau" et un temps de montée en température dit "sous air", tels qu'ils lui permettent d'atteindre une température de consigne déterminée, inférieure à ladite température donnée, lorsqu'il se trouve respectivement en présence de vapeur d'eau et en présence d'air, et
- des moyens aptes à soumettre ledit flux de gaz en sortie du générateur, dans une zone située au voisinage du capteur de température, à une perte thermique, cette perte thermique étant telle que, lorsque le flux de gaz est exempt de vapeur d'eau, le capteur de température n'atteint pas la température de consigne et lorsque le flux d'air contient une proportion de vapeur d'eau déterminée, ou proportion critique, le capteur de température atteint la dite température de consigne,
- des moyens de commande des moyens de vaporisation, en relation avec le capteur de façon à arrêter le fonctionnement des moyens de vaporisation lorsque le capteur atteint la température de consigne.

Lorsqu'il est utilisé sur un générateur de vapeur, le dispositif selon l'invention permet de doter celui-ci d'une réponse quasi-instantanée. Le capteur de température utilisé possède deux temps de montée en température, pour atteindre une température de consigne déterminée, lorsqu'il est mis respectivement en présence d'air et de vapeur d'eau à la même température. Le capteur de température est disposé à proximité d'un orifice de sortie du générateur de vapeur et pilote les moyens de chauffage de celui-ci, éventuellement par l'intermédiaire d'un dispositif de commande, par exemple d'une commande en tout ou rien ou d'une commande proportionnelle, en fonction de la température relevée. En tout ou rien, par exemple, le dispositif de commande active les moyens de chauffage du générateur de vapeur lorsque la température à laquelle est soumis le capteur est inférieure à une valeur de consigne prédéterminée, et coupe ceux-ci lorsque la température du capteur atteint la température de consigne. Cette mise en oeuvre permet de disposer d'un générateur à réponse instantanée, c'est-à-dire pouvant émettre immédiatement à tout moment, sur simple demande, de la vapeur d'eau, et dont le capteur ne réagit qu'à celle-ci. En effet, le capteur oscille entre une température inférieure à la température de consigne lorsque le générateur ne produit pas de vapeur d'eau, (ce qui déclenche la production de vapeur d'eau), et une température supérieure à la température de consigne lorsque le générateur produit de la vapeur d'eau, (ce qui provoque l'arrêt de la production de celle-ci.) Le générateur travaille donc toujours un peu, et compense ainsi, en fait, les pertes thermiques des parois, si bien qu'il maintient le liquide à sa température d'ébullition.

La présente invention a également pour objet un four de cuisson à la vapeur d'eau comprenant une enceinte de cuisson alimentée en vapeur d'eau par un générateur de vapeur, cette enceinte de cuisson étant mise en communication avec l'atmosphère ambiante par au moins un orifice de sortie, caractérisé en ce qu'il comporte :
- au moins un capteur de température, disposé sur le trajet de sortie de gaz provenant dudit orifice, de façon qu'il soit en contact avec celui-ci lorsqu'il sort de l'enceinte, le capteur de température présentant deux temps de montée en température respectifs, à savoir un temps de montée en température, dit "sous vapeur d'eau", et un temps de montée en température dit "sous air", pour atteindre une température de consigne déterminée inférieure à ladite température donnée, lorsqu'il se trouve respectivement en présence de vapeur d'eau et en présence d'air,
- des moyens aptes à soumettre le flux de gaz sortant de l'enceinte, dans une zone située au voisinage du capteur de température, à une perte thermique, cette perte thermique étant telle que, lorsque le flux d'air est exempt de vapeur d'eau, le capteur de température n'atteint pas la température de consigne et lorsque le flux d'air contient une proportion de vapeur d'eau déterminée, ou proportion critique, le capteur de température atteint la dite température de consigne
- des moyens de commande des moyens de vaporisation, en relation avec le capteur, de façon à arrêter le fonctionnement du générateur de vapeur lorsque le capteur atteint la température de consigne.

Selon l'invention le four est constitué d'une enceinte close, communiquant d'une part avec l'extérieur par un nombre réduit d'orifices et, d'autre part, avec un générateur de vapeur d'eau, intérieur ou extérieur à l'enceinte. Eventuellement, dans le cas d'un générateur de vapeur d'eau extérieur à l'enceinte, la communication avec le générateur de vapeur peut se faire par l'intermédiaire d'un dispositif de surchauffage de la vapeur d'eau pouvant amener celle-ci à une température nettement supérieure à 100°C, par exemple de l'ordre de 200 à 300°C. Avantageusement, l'enceinte de cuisson est dotée de moyens de chauffage, tels que des résistances électriques, intérieures ou extérieures à l'enceinte, permettant de chauffer celle-ci et de chauffer le gaz contenu dans celle-ci. Ces fours, comportent des orifices de communication de l'enceinte avec l'extérieur, ce qui permet d'assurer l'équilibrage naturel permanent de la pression entre l'enceinte et l'extérieur de celle-ci, et le capteur de température est positionné au voisinage de l'un de ces orifices. Ce capteur pilote la production de vapeur d'eau réalisée par le générateur, éventuellement au moyen d'un dispositif de commande, par exemple une commande en tout ou rien ou une commande proportionnelle. En tout ou rien, par exemple, le dispositif de commande actionne le générateur lorsque la température atteinte par le capteur est inférieure à une température de consigne prédéfinie, et coupe celui-ci lorsque la température du capteur atteint ladite température de consigne. Cette mise en oeuvre permet de remplir essentiellement trois fonctions :

De première part, au démarrage, elle assure le contrôle de l'évacuation de l'air et le remplissage en vapeur d'eau de l'enceinte de cuisson. Des mesures ont en effet montré que les transferts thermiques du mélange air-vapeur d'eau vers l'aliment sont d'autant plus importants et rapides que la proportion d'air est faible. La mise en oeuvre du procédé et du dispositif suivant l'invention permet d'assurer une évacuation optimale de l'air contenu initialement dans l'enceinte afin d'assurer une forte proportion de vapeur d'eau dans celle-ci. En effet, lorsque le générateur commence à fournir de la vapeur d'eau à l'enceinte, le gaz qui sort de celle-ci, est principalement constitué de l'air, initialement présent dans l'enceinte, et qui en est chassé par la vapeur d'eau. Or le temps de montée du capteur, lorsqu'il est en présence d'air, étant relativement élevé, on fait donc en sorte que le temps nécessaire à la vapeur produite par le générateur de vapeur pour chasser la totalité de l'air présent dans l'enceinte avant la mise en route de la cuisson soit inférieur au temps de montée sous air du capteur. Dans ces conditions l'évacuation de l'air continue donc jusqu'à ce que le gaz sortant par l'orifice au voisinage duquel est disposé le capteur de température, soit suffisamment riche en vapeur d'eau pour que la température du capteur atteigne la température de consigne. Dans ce cas, le capteur déclenche alors la mise hors tension des moyens de chauffage du générateur de vapeur d'eau. L'enceinte de cuisson n'étant alors balayée que par un flux de vapeur d'eau, la régulation est dès lors assurée au niveau du capteur par la sortie de vapeur d'eau.

De seconde part elle assure le maintien, en cours de cuisson, du bon remplissage en vapeur d'eau de l'enceinte. En effet, en début de cuisson, la vapeur d'eau se condense sur l'aliment, et il y a donc consommation de vapeur d'eau dans l'enceinte. Il en résulte un très bref appel d'air dans l'enceinte ou, du moins, la présence prolongée d'air exempt de vapeur autour du capteur. Cet air, passant notamment sur le capteur, fait chuter la température lue par celui-ci en dessous de la température de consigne, ce qui entraîne la mise sous tension des moyens de chauffage du générateur de vapeur et, en conséquence, la production de vapeur d'eau, cette dernière étant fournie à l'enceinte jusqu'à ce que le besoin en vapeur d'eau dans celle-ci soit satisfait, et qu'un flux excédentaire sorte par l'orifice au voisinage duquel est disposé le capteur. Inversement, en fin de cuisson, lorsque l'aliment est chaud, celui-ci se déshydrate, ce qui provoque un dégagement de vapeur d'eau, si bien qu'un apport supplémentaire de vapeur d'eau n'est donc plus nécessaire. Le dégagement de vapeur d'eau par l'aliment entraîne un flux de vapeur d'eau vers l'extérieur qui est détecté par le capteur, qui déclenche donc la mise hors tension des moyens de chauffage du générateur de vapeur d'eau.

De troisième part, elle assure le remplissage de l'enceinte en vapeur d'eau après une séquence d'ouverture puis de fermeture de la porte du four. En effet, comme indiqué précédemment, il est préférable que la cuisson se réalise sous une atmosphère la plus proche possible de la vapeur d'eau afin de favoriser au maximum les transferts thermiques. Dans l'exemple présent, le générateur de vapeur peut, de façon intéressante, être déconnecté lors de l'ouverture de la porte de l'enceinte de cuisson, de façon qu'il n'envoie pas de vapeur d'eau dans l'enceinte qui ne serait pas perçue par le capteur, puisqu'elle s'échapperait par la porte. Le générateur est reconnecté à la fermeture de la porte. Tant que la vapeur d'eau introduite remplit l'enceinte en chassant l'air, le capteur est en contact avec un mélange air/vapeur et lit une température basse, si bien qu'il laisse le générateur fournir de la vapeur d'eau à l'enceinte de cuisson. L'alimentation en vapeur ne s'arrête que lorsque l'enceinte de cuisson étant pleine de vapeur d'eau, un flux de vapeur d'eau excédentaire sort de celle-ci et élève suffisamment la température lue par le capteur pour atteindre la température de consigne.

On notera qu'un four suivant l'invention procure deux avantages supplémentaires, à savoir une minimisation du débit de vapeur d'eau, ce qui permet d'une part de réduire la quantité d'eau consommée, d'autre part, de réduire l'échappement de vapeur d'eau dans l'atmosphère et enfin de maintenir, dans la mesure du possible, une certaine agitation du gaz dans l'enceinte de cuisson ce qui permet de bénéficier de mouvements de convection de la vapeur d'eau dans celle-ci, qui améliorent les échanges thermiques.

Dans une variante de mise en oeuvre du four selon l'invention, celui-ci peut, en outre, être doté d'un surchauffeur permettant d'assurer l'élévation de la température de la vapeur d'eau fournie par le générateur de vapeur, au-delà de la température d'ébullition de l'eau à la pression atmosphérique. Ceci peut être obtenu, par exemple, de manière très simple et connue, par simple passage de la vapeur d'eau, en sortie du générateur de vapeur d'eau, sur une résistance chauffée disposée dans un tube. La vapeur d'eau peut être ainsi aisément chauffée à une température comprise entre 100°C et 300°C, selon la puissance fournie à la résistance chauffante.

Le four selon l'invention peut, bien entendu, être doté de tous moyens de chauffage habituels, compatibles avec la présence de vapeur d'eau dans l'enceinte, permettant de mettre en oeuvre la cuisson d'aliments et en particulier il peut être équipé de résistances électriques. Il peut comporter des éléments de contrôle, tels qu'un dispositif de contrôle de la température de l'intérieur de l'enceinte de cuisson, appelé plus couramment thermostat, un minuteur, ou un programmateur.

Dans une autre forme de mise en oeuvre de l'invention, un dispositif unique de contrôle de la température permet de réaliser un réglage global de la température de l'enceinte de cuisson et de celle de la vapeur d'eau entrant dans celle-ci, la régulation étant simultanée mais indépendante pour chaque élément de chauffage.

La demanderesse a également établi que, lorsque le capteur est mis en présence d'un mélange d'air et de vapeur d'eau, on peut observer qu'il indique une montée en température dont la rapidité se situe de façon intermédiaire entre celle existant en présence de vapeur d'eau et celle existant en présence d'air, et la montée en température est d'autant plus rapide que la proportion de vapeur d'eau dans l'air est élevée. Un étalonnage des temps de montée en température enregistrée ainsi, en fonction de la proportion air/vapeur d'eau, permet d'associer un paramètre du temps de montée en température avec cette proportion. Dans des conditions d'utilisation déterminées, on dispose ainsi d'un moyen de mesure de la proportion air/vapeur d'eau, c'est-à-dire d'un moyen de mesure du degré hygroscopique de l'air.

La présente invention a ainsi également pour but un procédé et un dispositif permettant de déterminer, la proportion de vapeur d'eau éventuellement contenue dans une masse d'air donnée,

La présente invention a ainsi pour objet un procédé pour déterminer la proportion de vapeur d'eau éventuellement contenue dans un mélange d'air et de vapeur d'eau à une température donnée déterminée, caractérisé en ce qu'il comporte les étapes consistant à :
- déterminer, pour au moins un domaine de températures de consignes déterminées, les temps de montée en température "sous vapeur" et "sous air" d'au moins un capteur de température, c'est-à-dire les temps nécessaires pour lui permettre d'atteindre une température de consigne déterminée, lorsqu'il est successivement mis en contact avec de la vapeur d'eau et avec de l'air à ladite température donnée,
- mettre le capteur de température en présence dudit volume jusqu'à ce qu'il atteigne la température de consigne,
- déterminer le temps de montée en température du capteur dans ledit mélange, et
- déterminer l'écart entre le temps de montée en température mesuré par le capteur avec les temps de montée en température "sous vapeur" et "sous air" dudit capteur de façon à en déduire la proportion de vapeur contenue dans ledit volume d'air.

La présente invention a également pour objet un dispositif pour déterminer le pourcentage en vapeur d'eau éventuellement contenu dans un mélange d'air et de vapeur d'eau à une température donnée déterminée, caractérisé en ce qu'il comporte au moins,
- un capteur de température présentant deux temps de montée en température respectifs à savoir un temps de montée en température, dit "sous vapeur d'eau", et un temps de montée en température dit "sous air", pour atteindre, une température de consigne déterminée inférieure à ladite température donnée, lorsqu'il est respectivement en présence de vapeur d'eau et en présence d'air,
- des moyens pour mettre le capteur en présence dudit volume pendant un temps inférieur au temps de montée "sous air" et au moins égal au temps de montée "sous vapeur",
- des moyens pour effectuer, au bout du temps de mise en présence, une mesure de température, et
- des moyens pour comparer le temps de montée en température mesurée par le capteur, avec les temps de montée en température "sous vapeur" et "sous air" dudit capteur de façon à en déduire la proportion de vapeur contenue dans ledit volume d'air.

On décrira ci-après, à titre d'exemple non limitatif, une forme d'exécution de la présente invention, en référence au dessin annexé sur lequel :

La figure 1 est un graphique représentant la température atteinte par un capteur thermique en fonction du temps pendant lequel il est soumis respectivement à une atmosphère de vapeur d'eau à une température donnée, et à une atmosphère d'air à la même température.

La figure 2 est un graphique représentant la température atteinte par un capteur thermique en fonction du temps pendant lequel il est soumis respectivement à une atmosphère de vapeur d'eau à une température donnée, et à une atmosphère d'air à la même température, le capteur étant disposé dans une zone soumise à des pertes thermiques parcouru par un flux de gaz constitué d'air et/ou de vapeur d'eau respectivement à 230°C et à 320°C.

La figure 3 est une vue représentant, de façon schématique, le mode de mise en oeuvre utilisé pour réaliser le graphique de la figure 2.

La figure 4 est un graphique représentant la température atteinte par deux capteurs thermiques différents, en fonction du temps pendant lequel ils sont soumis respectivement à une atmosphère de vapeur d'eau, à une température donnée, et à une atmosphère d'air à la même température.

La figure 5 est une vue en perspective, partiellement coupée transversalement, d'un générateur de vapeur suivant l'invention.

La figure 6 est une vue schématique d'un circuit d'alimentation électrique du générateur de vapeur de la figure 5.

La figure 7 est une vue en coupe transversale d'un four de cuisson suivant l'invention.

La figure 8 est une vue schématique d'un circuit d'alimentation électrique du four de cuisson de la figure 7.

La figure 9 est un graphique représentant la température atteinte par un capteur thermique en fonction du temps pendant lequel il est soumis respectivement à une atmosphère de vapeur d'eau, à une température donnée, à une atmosphère d'air à la même température, et à une atmosphère constituée d'un mélange comprenant de 40% de vapeur d'eau et 60% d'air à la même dite température.

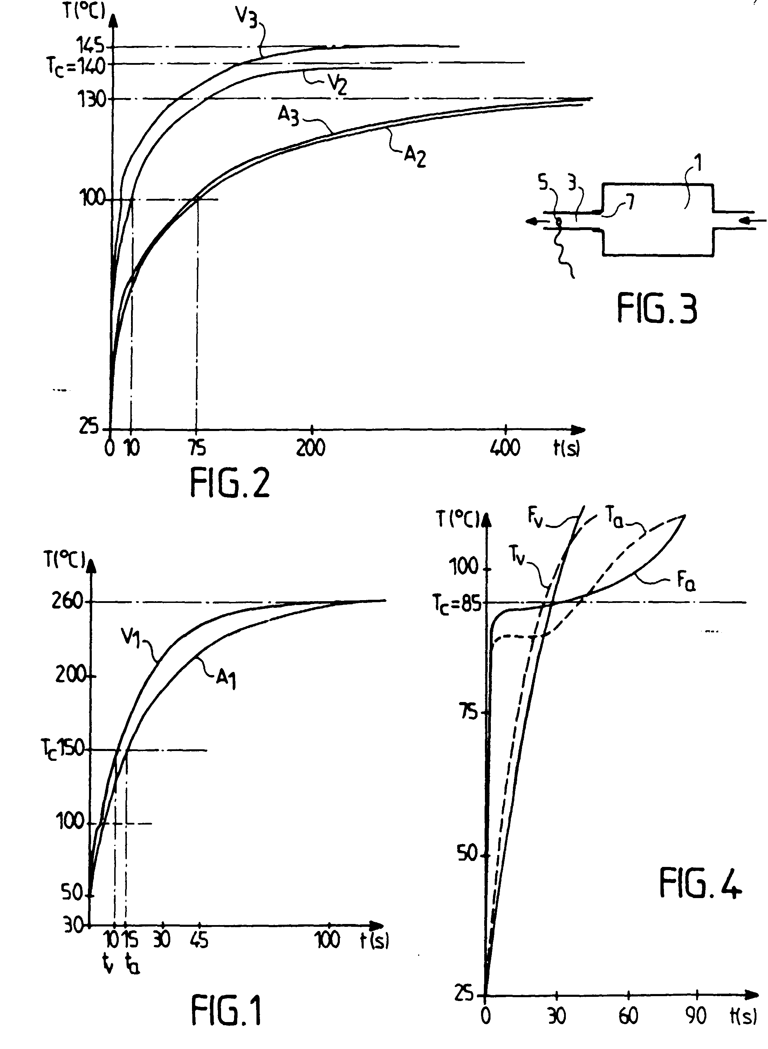

Les courbes des figures 1 et 2 illustrent les éléments essentiels du principe de base de la présente invention. Ainsi la figure 1 représente la température atteinte, en fonction du temps, par un capteur thermique respectivement en contact avec une atmosphère de vapeur d'eau et une atmosphère d'air à la même température. La figure 2 représente la température atteinte par un capteur thermique, en fonction du temps pendant lequel il est respectivement en contact avec une atmosphère de vapeur d'eau et une atmosphère d'air, le capteur étant disposé dans une zone soumise à des pertes thermiques.

Pour réaliser la courbe de la figure 1, la demanderesse a successivement mis un capteur de température 5, constitué d'un thermocouple, au contact d'une atmosphère de vapeur d'eau à 240°C et d'une atmosphère d'air à la même température, et l'on a représenté les variations de température subies par le capteur de température 5 en fonction du temps. On constate ainsi que pour atteindre une température de consigne Tc égale par exemple à 150°C, le capteur de température, comme représenté sur la courbe A₁, met 15 secondes lorsqu'il est au contact de l'air (le temps de montée "sous air" tₐ est donc de 15 secondes) et 10 secondes seulement, comme représenté sur la courbe V₁, lorsqu'il est au contact de la vapeur d'eau (le temps de montée "sous vapeur" tᵥ est donc de 10s), soit une différence de 5 secondes. Si l'on prenait, sur la même courbe de la figure 1, une température de consigne T_{c} égale à 80°C on constate alors que le temps de montée tᵥ sous vapeur est sensiblement la moitié du temps de montée tₐ sous air. Cette différence des temps de montée tₐ et tᵥ est mise à profit pour détecter la présence de vapeur d'eau dans de l'air soit en "mesurant" le temps de montée du capteur, pour atteindre une température de consigne donnée, soit en "mesurant" la température atteinte par le capteur 5 au bout d'un temps déterminé.

Comme exposé précédemment la sensibilité du procédé et du dispositif peut être améliorée en disposant le capteur 5 dans un milieu parcouru par un flux d'air et/ou de vapeur, soumis à des pertes thermiques

Ainsi pour réaliser les courbes de la figure 2 et comme représenté, de façon schématique, sur la figure 3, on a successivement injecté, à un débit donné, de la vapeur d'eau, puis de l'air chaud, à 230°C puis à 320°C dans une enceinte 1 pourvue d'un orifice de sortie 7, relié à un tuyau de sortie 3 dans lequel un capteur thermique 5 a été disposé, non loin de l'extrémité libre du tuyau 3, de façon à ce qu'il soit soumis à des pertes thermiques, et l'on a enregistré au cours du temps la température fournie par le capteur 5. On obtient ainsi deux courbes V₂ et V₃ correspondant respectivement à un milieu sous vapeur à 230°C et à 320°C et deux courbes A₂ et A₃ correspondant respectivement à un milieu sous air aux mêmes températures. L'examen de ces courbes montre que les écarts des temps de montée tₐ sous air et tᵥ sous vapeur d'eau sont nettement augmentés.

Ainsi pour une température d'air et de vapeur de 230°C et une température de consigne T_{c} de 100°C, le temps de montée tₐ sous air du capteur 5 est d'environ 75s alors que ce même temps de montée tᵥ sous vapeur n'est plus que de 10s. Ce mode de mise en oeuvre permet donc d'améliorer de façon particulièrement efficace la sensibilité et la précision de la détection de vapeur d'eau. On constate, de plus, que les courbes obtenues à des températures de 230°C et 320°C, respectivement sous air et sous vapeur d'eau, sont très proches.

On constate de plus que les courbes sous air et sous vapeur tendent vers des valeurs asymptotiques de l'ordre, respectivement, de 130°C et de 145°C. Cela signifie physiquement que, pour la perte thermique donnée, le capteur placé dans un milieu constitué exclusivement d'air ne pourra atteindre, dans les conditions de mise en oeuvre, et quel que soit le temps de mise en présence, une température supérieure à 130°C alors que lorsque ce même capteur est placé dans un milieu constitué exclusivement de vapeur, il pourra atteindre une température de 145°C.

Dans ces conditions on constate que si l'on prend une température de consigne T_{c} comprise entre les deux asymptotes des courbes sous vapeur et sous air, à savoir par exemple dans le cas présent une température de 140°C, le dispositif suivant l'invention sera en mesure de différencier, au bout d'un temps quelconque, l'air sans vapeur d'eau de la vapeur d'eau elle-même.

Bien entendu on pourra agir sur la température de consigne en modifiant la perte thermique, par exemple en approchant ou en éloignant le capteur 5 de l'ouverture libre du tube 3.

Comme représenté sur la figure 4, la demanderesse a établi, dans des conditions sensiblement identiques, deux paires de courbes de même type, (en utilisant deux capteurs de natures différentes), à savoir une première paire de courbe avec un capteur Fer Nickel, respectivement sous air (courbe Fₐ) et sous vapeur (Fᵥ) et une seconde paire de courbe avec un thermocouple également sous air (courbe Tₐ) et sous vapeur (courbe Tᵥ), pour une température d'air et de vapeur de 135°C, proche d'une température de consigne T_{c} de 85°C. Comme on peut le constater, les courbes Fᵥ et Tᵥ d'une part et Fₐ et Tₐ d'autre part sont très proches, ce qui montre que la détection de vapeur suivant l'invention peut être mise en oeuvre avec d'autres capteurs que des thermocouples, sans variation sensible des résultats.

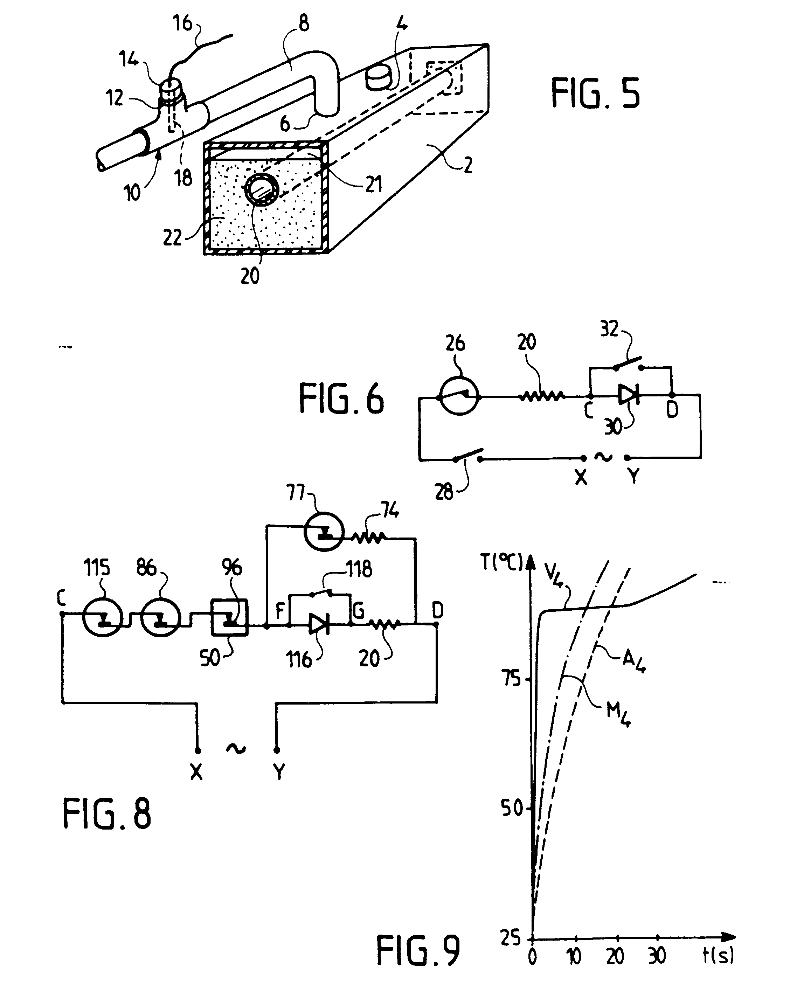

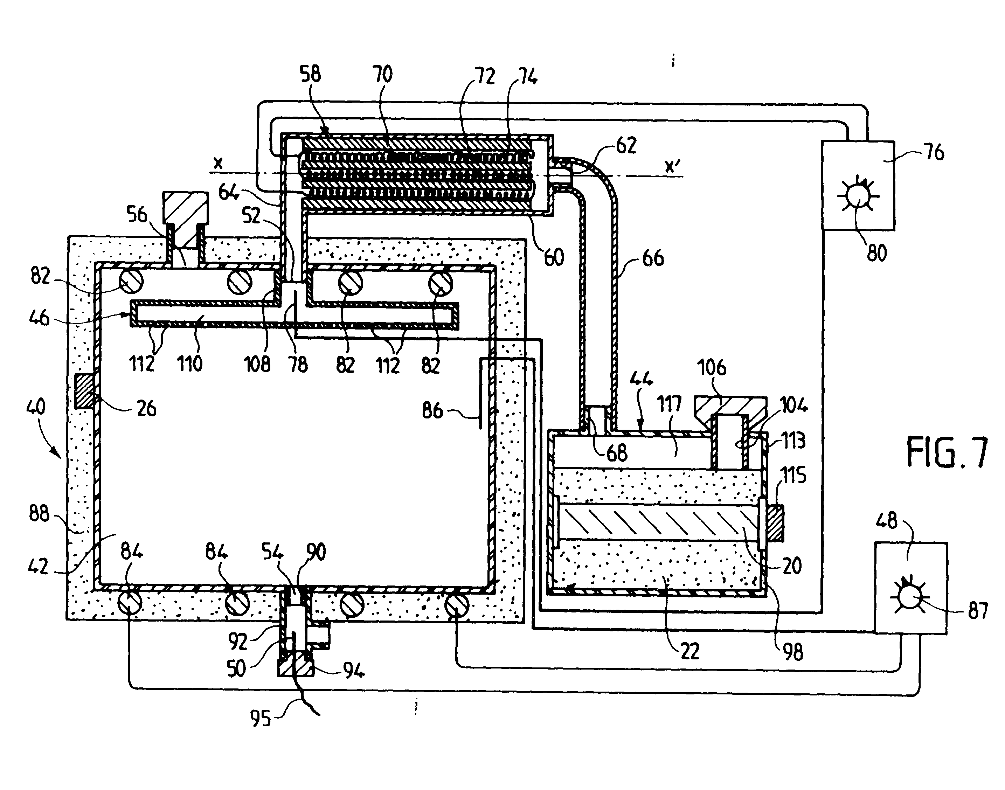

La présente invention est utilisée, comme représenté sur la figure 5, pour assurer la régulation du débit de vapeur fourni par un générateur de vapeur.

Le générateur de vapeur est constitué d'une enceinte 2 parallélépipèdique, en un matériau plastique tel que, par exemple, du polypropylène, et comporte, à sa partie supérieure, un orifice 4 obturé par un bouchon permettant le remplissage en liquide de l'enceinte 2. Un autre orifice 6 est également prévu sur la face supérieure de l'enceinte 2, et est doté d'un tuyau souple 8, par exemple en silicone, qui permet à la vapeur d'eau produite par le générateur d'être évacuée. Le tuyau 8 est interrompu, à une certaine distance de l'enceinte 2, par un petit té 10, comportant un orifice latéral 12. Dans l'orifice latéral 12 du té 10, un bouchon 14 en silicone est enfoncé "à force" afin d'assurer une parfaite étanchéité. Ce bouchon 14 est percé, suivant son axe longitudinal, d'un très fin canal, par lequel est introduit un fil support 16 d'un capteur de température 18. Ce canal, comprimé lorsque le bouchon 14 est enfoncé dans le té 10, ne laisse pas passer les gaz. Le fil support 16 traverse ainsi le bouchon 14, et le capteur de température 18 est disposé de façon à se trouver au centre du tuyau 8, sans toucher les parois de ce dernier.

Le capteur de température 18 utilisé est un thermocouple du type de celui dont on a représenté, sur la figure 2, la courbe de variation de la température en fonction du temps sous atmosphère de vapeur et sous atmosphère d'air. Ce thermocouple 18 possède deux temps de montée respectifs pour atteindre une température de consigne T_{c} de 100°C lorsqu'il est respectivement en présence de vapeur à 320°C et d'air à la même température, à savoir un premier temps de montée (sous vapeur) tᵥ égal à environ 10s et un second temps de montée (sous air) tₐ égal à environ 75s.

L'enceinte 2 comporte en outre une résistance électrique 20, par exemple de type cartouche, c'est-à-dire constituée d'un élément tubulaire en acier inoxydable à l'intérieur duquel est logée une résistance électrique proprement dite, d'une puissance d'environ 1200 watts, cet élément tubulaire étant fixé, à ses extrémités, aux deux parois latérales de l'enceinte 2, par des moyens de fixation non représentés sur le dessin.

Un corps poreux 22, constitué par exemple de fibres de roche, et comportant préférentiellement un liant destiné à favoriser, notamment, sa tenue mécanique, est disposé à l'état comprimé dans l'enceinte 2 autour de la résistance 20, de façon à assurer un bon contact mécanique avec celle-ci, et par là un bon transfert thermique. Un espace 21 est laissé libre entre la face supérieure du corps poreux 22, et la face interne supérieure de l'enceinte 2 de façon à permettre l'expansion de la vapeur d'eau produite.

Le présent dispositif est alimenté en courant électrique par l'intermédiaire d'un circuit électrique de commande représenté sur la figure 6. Aux bornes X et Y du réseau électrique sont successivement connectés, en série, un interrupteur général 28, un contact 26 associé au capteur de température 18, qui laisse passer le courant tant que la température de seuil n'est pas atteinte, la résistance 20 et une diode 30 aux bornes C et D de laquelle un interrupteur 32 est monté en parallèle, cet interrupteur 32 permettant, lorsqu'il est ouvert, de ne laisser passer que la moitié de la puissance nominale du générateur, de façon, par exemple, à ralentir les phases d'oscillation du capteur 18.

Dans ces conditions le fonctionnement du générateur de vapeur s'effectue comme suit : avant la mise sous tension, l'utilisateur introduit le liquide à vaporiser dans l'enceinte 2, par l'orifice 4, après avoir ôté le bouchon de fermeture, jusqu'à ce que le niveau de liquide affleure la base du corps poreux 22. Lors de la mise sous tension du dispositif, c'est-à-dire dès la fermeture de l'interrupteur général 28, la résistance 20 du générateur de vapeur d'eau commence à chauffer le liquide contenu par imprégnation dans le corps poreux 22. Au bout d'un certain temps, l'eau contenue dans le corps poreux 22 entourant la résistance 20 parvient à sa température d'ébullition, et commence à produire de la vapeur d'eau. La vapeur d'eau produite refoule tout d'abord l'air initialement présent dans l'enceinte 2 qui s'échappe par le tuyau 8.

Le générateur de vapeur d'eau aura un débit de vapeur d'eau tel que l'évacuation totale de l'air contenu dans l'espace 21 de l'enceinte 2 soit réalisée en un temps inférieur au temps de montée sous air tₐ du capteur 18, c'est-à-dire dans le cas présent inférieur à 75 secondes, afin d'éviter que le capteur 18 n'atteigne la température de consigne T_{c} avant que tout l'air de l'enceinte 2 ne soit évacué, ce qui aurait pour conséquence d'arrêter de façon prématurée la production de vapeur.

Cette phase d'évacuation d'air se poursuit donc tant que la majorité de l'air n'a pas été chassée par la vapeur d'eau, et qu'une quantité notable de vapeur d'eau n'est pas présente dans l'air évacué. Lorsque le flux d'air vapeur sortant contient très majoritairement de la vapeur d'eau, une élévation rapide de la température du capteur 18 s'ensuit, et lorsque celle-ci dépasse la température de consigne T_{c} de 100°C au bout d'un temps nécessairement supérieur à tᵥ, c'est dire dans le cas présent de 10 secondes, le contact 26 du thermocouple 18 s'ouvre, coupant de ce fait la résistance 20 du générateur. L'enceinte est alors remplie de vapeur d'eau. La production de vapeur d'eau s'interrompt alors et le générateur passe à l'état repos. Dès la suppression du flux de vapeur d'eau dans le tuyau 8, la température du capteur de température 18 commence à redescendre en-dessous de la température de consigne Tc de 100°C et le contact 26 du capteur se ferme alors, redéclenchant la production de vapeur d'eau. Un cycle d'entretien peut alors s'établir, comprenant une production périodique de vapeur d'eau assurant un remplissage constant de vapeur d'eau dans l'enceinte 2.

Bien entendu, le procédé et le dispositif de détection de vapeur d'eau suivant l'invention peuvent être utilisés avec des générateurs de vapeur pourvus de moyens de chauffage quelconques et, notamment, d'électrodes, entre lesquelles est disposé un corps poreux comprimé contenant le liquide à vaporiser et que l'on alimente en courant électrique.

Le procédé et le dispositif de détection de vapeur sont particulièrement intéressants pour assurer, de façon simple, précise et économique, la régulation du flux de vapeur d'eau alimentant un four destiné à la cuisson d'aliments.

Ainsi, sur la figure 7, un four 40 est essentiellement constitué d'une enceinte de cuisson 42, d'un générateur de vapeur d'eau 44, disposé à l'extérieur de l'enceinte 42, d'un dispositif de distribution 46 de la vapeur d'eau dans l'enceinte 42, de moyens de régulation 48 de la température de l'enceinte 42, que l'on peut ajuster à l'aide d'une commande 87, d'un dispositif de détection de vapeur, comprenant notamment un capteur de température 50, et d'un dispositif d'alimentation électrique. L'enceinte de cuisson 42, de forme parallèlèpipédique, est composée de cinq faces planes, métalliques, constituant le plafond, le plancher, les côtés et l'arrière, et d'un cadre équipé d'une porte, non représentée sur le dessin.

L'enceinte de cuisson 42 possède trois orifices à savoir, un orifice d'admission de vapeur 52, un orifice de sortie du mélange air/vapeur 54 et un orifice de sécurité 56 permettant l'évacuation rapide du gaz en cas de surpression accidentelle.

Bien qu'un surchauffeur ne soit pas obligatoire à la mise en oeuvre de la présente invention, l'orifice d'admission de vapeur 52 est, dans la présente réalisation, relié au générateur de vapeur 44 par l'intermédiaire d'un surchauffeur 58. Ce dernier, qui est destiné à élever la température de la vapeur d'eau entrant dans l'enceinte de cuisson 42 au-delà de 100°C, est composé essentiellement d'un tube 60 en acier inoxydable, d'axe longitudinal xx′, qui s'ouvre, à ses extrémités opposées, sur deux tubes de plus petit diamètre, à savoir un tube d'admission 62 et un tube de sortie 64. Le tube d'admission 62 est raccordé à un tuyau souple 66 relié à un tube de sortie 68 du générateur de vapeur d'eau 44, de façon à permettre l'admission de la vapeur d'eau dans le surchauffeur 58. Le tube de sortie 64 est relié à l'orifice d'admission de vapeur 52 de l'enceinte de cuisson 42. Un mandrin cylindrique 70, en céramique réfractaire, percé dans le sens de la longueur xx′ d'une série de canaux cylindriques 72, est disposé à l'intérieur du tube 60. Un fil, par exemple en un matériau commercialisé sous la marque "KANTHAL", de résistivité d'environ 25 ohms par mètre, enroulé sur lui-même à la manière d'un ressort hélicoïdal, est disposé dans chacun des sept canaux 72 de façon à former une résistance électrique 74. Les extrémités de cette résistance électrique 74 sont reliées électriquement à des moyens de régulation 76 assurant la mise en marche et l'arrêt du surchauffeur 58, et qui sont réglables au moyen d'une commande 80.

Un premier capteur de température, constitué d'un thermocouple 78, est disposé à proximité de l'orifice d'admission de vapeur 52 de l'enceinte de cuisson 42. Ce capteur 78 mesure la température de la vapeur d'eau sortant du surchauffeur 58 et qui est admise dans l'enceinte 42. Ce thermocouple 78 est relié électriquement aux moyens de régulation 76, de façon à piloter le fonctionnement du surchauffeur 58, en fonction d'une température choisie affichée au moyen d'une commande 80.

Le four de cuisson suivant l'invention est muni de deux résistances de chauffage en forme de double U, à savoir une première résistance 82, suspendue sous le plafond de l'enceinte 42, dont les deux extrémités comportent des connexions électriques d'alimentation, sortant de l'enceinte 42 par des orifices dotés de passages étanches, non représentés sur le dessin, cette première résistance pouvant servir de gril, lorsqu'elle est portée à une température de l'ordre de 500 à 600°C, comme dans les fours traditionnels à air, et une seconde résistance 84, située sous le plancher de l'enceinte de cuisson 42, contre laquelle elle est plaquée. Les extrémités de cette résistance de chauffage 84 sont reliées électriquement aux bornes de sortie des moyens de régulation 48 de la température de l'enceinte 42. Un second capteur de température, constitué d'un thermocouple 86, est disposé contre une face latérale de l'enceinte de cuisson 42 et est relié électriquement à la commande de température 48. Ce thermocouple commande la puissance électrique fournie à la résistance 84 en fonction de la différence existant entre la température affichée par la commande 87 et celle mesurée par le thermocouple 86. L'enceinte de cuisson 42 est isolée thermiquement par addition d'un matelas de calorifugation 88, tel que du silicate d'alumine.

Sur l'orifice de sortie de gaz 54 une petite couronne cylindrique 90 est soudée, sur laquelle un té 92 est emmanché à force, l'orifice de raccordement latéral de ce té 92 étant obstrué, d'une manière étanche, par un bouchon 94 traversé par un fil 95 du thermocouple 50. Ce dernier est disposé sensiblement au centre du té 92, sans aucun contact avec les parois de celui-ci. Le thermocouple 50 est du type de celui dont on a tracé, sur la figure 2, la courbe de variation de la température en fonction du temps, respectivement sous atmosphère de vapeur et sous atmosphère d'air. Ce thermocouple 50 possède deux temps de montée respectifs pour atteindre une température de consigne T_{c} de 100°C lorsqu'il est respectivement mis en présence de vapeur à 320°C et d'air à la même température, à savoir un premier temps de montée (sous vapeur) tᵥ égal à environ 10s et un second temps de montée (sous air) tₐ égal à environ 75s. Le flux gazeux sortant de l'enceinte 42 rencontre ainsi le thermocouple 50 de "plein fouet", ce qui optimise la réponse de celui-ci. Du fait de son mode de fixation à l'intérieur du té 92, le capteur 50 est soumis à des pertes thermiques. En jouant sur la proximité du capteur 50 avec l'orifice du té 92 ouvert à l'air libre, on peut régler l'importance de ces pertes thermiques de façon qu'elles soient telles que lorsque le té 92 est traversé par de l'air, le capteur 50 ne peut atteindre la température de consigne T_{c}, et lorsque cet air contient une proportion P_{c} de vapeur, ou proportion critique, le capteur 50 atteint la dite température de consigne. Lorsque la température dans le té 92 atteint la température de consigne T_{c} de 100°C, le contact électrique 96 associé au thermocouple 50 est ouvert, ce qui entraîne la mise hors tension de la résistance de chauffage 20 du générateur de vapeur d'eau 44 comme il sera décrit en détail ci-après. La demanderesse a montré par des essais qu'un seuil d'ouverture des contacts électriques 96 du thermocouple 50, compris entre 95°C et 108°C, permettait de minimiser la quantité de vapeur d'eau sortant de l'enceinte 42 au cours d'une cuisson, tout en assurant un renouvellement de la vapeur d'eau dans l'enceinte, et par là une convection, permettant d'obtenir des temps de cuisson inférieurs à ceux classiquement rencontrés dans les fours traditionnels.

Le dispositif de distribution 46 de la vapeur d'eau arrivant dans l'enceinte de cuisson 42 est disposé en sortie de l'orifice 52. Ce dispositif de distribution est constitué d'un premier tube métallique 108 qui vient s'encastrer, par l'une de ses extrémités, sur le tube de sortie 64 du surchauffeur 58. Le tube 108 débouche par son autre extrémité dans un second tube 110 qui lui est perpendiculaire et qui est obturé à chacune de ses extrémités. Ce tube 110 comporte, sur toute sa longueur et à sa partie inférieure, une série de trous 112. Ces trous 112, disposés de préférence en quinconce et répartis uniformément sur toute sa surface, sont calibrés de manière que la vapeur d'eau produite soit en très légère surpression afin d'atteindre facilement les aliments placés dans l'enceinte de cuisson 42.

Le générateur de vapeur d'eau 44 est constitué extérieurement d'un boîtier 113, réalisé en matière plastique telle que du polypropylène, et est de conception intérieure similaire à celle du générateur présenté à la figure 5, c'est-à-dire comprenant une résistance électrique 20, de type cartouche, d'une puissance d'environ 1250 watts, et d'un corps poreux 22, comprimé autour de cette résistance 20, constitué préférentiellement de laine de quartz. A une extrémité de la résistance 20 est disposé un bilame 115 dont les contacts électriques sont en position fermée, au repos, lesdits contacts se mettant en position ouverte dès que la température dépasse un seuil donné de 130°C. Un espace libre 117 est laissé entre la surface supérieure du corps poreux 22 et le plafond du boîtier 113, de manière à permettre l'expansion de la vapeur d'eau produite. Un orifice circulaire 104, fermé par un bouchon dévissable 106, est prévu sur la face supérieure du boîtier 113 de façon à permettre le remplissage en eau du générateur de vapeur 44.

Le circuit électrique dont est pourvu le four suivant l'invention et qui est représenté partiellement sur la figure 8, comprend essentiellement deux sous-ensembles. Un premier sous-ensemble, qui permet le fonctionnement des moyens de régulation de température 48 et 76 et qui, puisque ne présentant aucune caractéristique particulière par rapport à ceux équipant les fours traditionnels, ne sera pas décrit ici, et un deuxième sous-ensemble, destiné à la production et au chauffage de la vapeur d'eau et à la régulation du débit de cette vapeur d'eau. Ce sous-ensmeble est constitué d'un circuit alimenté par les bornes X et Y du réseau électrique. Ce circuit comprend, en série, entre des points C et D, le bilame 115 de sécurité et d'arrêt en cas d'absence d'eau, le thermocouple 86 de mise en température de l'enceinte 42, les contacts 96 du capteur de température 50 de régulation de débit de vapeur d'eau suivant l'invention, une diode de puissance 116 et la résistance de chauffage 20 du générateur de vapeur 44. Un interrupteur de réduction de puissance 118 est placé en dérivation aux bornes F et G de la diode 116. Lorsqu'on souhaite réduire la puissance électrique fournie à la résistance 20, on ouvre l'interrupteur 118 ce qui réduit cette puissance à environ la moitié de la puissance nominale, par redressement d'une alternance sur deux du courant alternatif d'alimentation. La résistance 74 du surchauffeur 58, en série avec un bilame de réglage, est disposée en parallèle entre les bornes F et D.

Dans ces conditions, le fonctionnement du four suivant l'invention s'établit comme suit. Avant la mise sous tension de celui-ci, l'utilisateur remplit d'eau le corps poreux 22 du générateur de vapeur d'eau 44, par l'orifice 104, après avoir enlevé le bouchon 106, jusqu'à ce que le niveau d'eau affleure la surface supérieure du corps poreux 22. Il sélectionne un mode de cuisson à l'aide de la commande de température 87 et de la commande 80 de la température de la vapeur d'eau entrant dans l'enceinte 42, ainsi qu'une durée de cuisson. Toutes ces indications peuvent être rentrées dans un programmateur, non représenté sur le dessin, auquel on indiquera de plus l'heure du début de cuisson. La mise en place de l'aliment dans l'enceinte de cuisson 42 s'effectue de manière classique, après une période éventuelle de préchauffage du four. Lorsque l'utilisateur a fixé une durée de cuisson sur le minuteur, ou sur signal du programmateur, l'appareil de cuisson est mis sous tension. Les résistances de chauffage supérieure 82 et/ou inférieure 84 de l'enceinte de cuisson 42 sont alimentées en courant, en fonction de la sélection réalisée, et sont pilotées par régulation thermostatique, de façon à maintenir une température dans l'enceinte 42 égale à celle indiquée sur le dispositif de contrôle 48. Simultanément, la résistance 74 du surchauffeur 58 est alimentée en courant électrique, le pilotage étant effectué par régulation thermostatique, de manière à maintenir la température de la vapeur d'eau égale à celle indiquée sur les moyens de régulation 76. Lorsque la température dans l'enceinte atteint 100°C, le bilame 86 se ferme, déclenchant l'activation de la résistance 20 du générateur de vapeur d'eau 44. Cet apport de vapeur d'eau permet de remplir l'enceinte de cuisson 42 en vapeur d'eau en chassant l'air entré lors de la mise en place dans celle-ci de l'aliment.

En effet, tant que la composition du gaz sortant de l'enceinte de cuisson 42 n'est pas suffisamment riche en vapeur, le capteur de température 50 n'atteind pas la température de consigne T_{c} (égale ici à 100°C) et le générateur continue à produire de la vapeur d'eau et à fournir celle-ci à l'enceinte de cuisson 42. Dès que l'air est chassé de l'enceinte de cuisson 42, le gaz en sortie de celle-ci est alors constitué de vapeur d'eau ayant un temps de montée tᵥ de 10 secondes et porte, au bout de cette durée, le capteur de température 50 à la température de consigne T_{c}, ce qui entraîne l'ouverture du contact 96 et la coupure de l'alimentation électrique de la résistance de chauffage 20 du générateur de vapeur 44.

On notera que ce dernier doit avoir un débit de vapeur suffisamment important pour que, entre le moment où l'air commence à sortir de l'enceinte de cuisson 42 et le moment où la totalité de l'air est chassé de celle-ci, le temps écoulé soit inférieur au temps de montée tₐ du capteur de température 50 dans l'air (qui est, dans le cas présent, d'environ 75 secondes), de façon à éviter que le capteur de température 50 n'atteigne la température de consigne T_{c} alors qu'il reste encore de l'air dans l'enceinte de cuisson 42.

D'autre part, en cours de cuisson, et généralement en début de celle-ci, la vapeur d'eau se condense sur l'aliment et celui-ci consomme alors de la vapeur, ce qui a pour effet de créer un appel d'air extérieur. Cet air, à la température ambiante, vient ainsi en contact avec le capteur 50, si bien qu'il fait chuter la température de celui-ci, ce qui a pour effet de mettre en marche le générateur de vapeur 44 qui produit alors très rapidement une quantité de vapeur remplaçant l'air entré dans l'enceinte de cuisson 42, et refoule celui-ci, ainsi que la vapeur en excédent, à l'extérieur. Tout passage de cette vapeur sur le capteur 50 pendant au moins un temps tᵥ (ici de 10 secondes) provoquera, comme précédemment, l'arrêt du générateur de vapeur 44.

Inversement, en fin de cuisson, lorsque l'aliment est chaud, celui-ci se déshydrate, ce qui provoque un dégagement de vapeur d'eau vers l'extérieur, qui est détecté par le capteur 50, qui déclenche donc la mise hors tension de la résistance de chauffage 20 du générateur de vapeur 44.

La présente invention permet donc de minimiser la consommation de vapeur d'eau utilisée, ce qui est intéressant d'une part sur le plan de la consommation du four en eau et en électricité et, d'autre part, sur le plan du confort d'utilisation puisque la quantité de vapeur rejetée sur le lieu de cuisson est notablement réduite.

De plus, la présente invention permet d'assurer, dans l'enceinte de cuisson, des mouvements de convection de la vapeur d'eau qui ont pour effet d'améliorer les échanges thermiques.

Le procédé et le dispositif suivant l'invention peuvent également être utilisés pour la détermination de la quantité de vapeur d'eau contenue dans un mélange gazeux air/vapeur d'eau.

En effet, sur la figure 9 on a représenté la température prise par un capteur de température, constitué d'un thermocouple, en fonction du temps pendant lequel il est respectivement mis en contact avec de la vapeur à 135°C (courbe V₄), avec de l'air (courbe A₄) à 135°C et avec un mélange constitué de 40% de vapeur d'eau et 60% d'air (courbe M₄) à 135°C.

On constate que le temps mis par la sonde pour atteindre une température de consigne donnée est intermédiaire entre celui mis par la sonde pour atteindre cette même température dans des milieux uniquement vapeur et uniquement air. Il y a donc bien gradation de ce temps en fonction de la proportion de vapeur dans l'air, et donc possibilité d'une mesure de cette proportion par examen du temps mis pour atteindre la température de consigne.

## Revendications

1. Procédé de détection, dans un volume d'air à une température donnée, de la présence de vapeur d'eau, caractérisé en ce qu'il comporte les étapes consistant à :
- mettre en présence dudit volume d'air au moins un capteur de température (18,50) présentant deux temps de montée en température respectifs, à savoir un temps de montée en température (tᵥ) dit "sous vapeur d'eau" et un temps de montée en température (tₐ) dit "sous air", tels qu'ils lui permettent d'atteindre, une température de consigne (T_{c}) déterminée, inférieure à ladite température donnée, lorsqu'il se trouve respectivement en présence de vapeur d'eau et en présence d'air, le capteur (18,50) étant mis en présence dudit volume
- soit dans une zone apte à subir une perte thermique telle que lorsque ledit volume d'air est exempt de vapeur d'eau, le capteur de température (18,50) n'atteint pas la température de consigne (T_{c}) et lorsque ledit volume d'air contient une proportion de vapeur d'eau déterminée, ou proportion critique (P_{c}), le capteur de température (18,50) atteint ladite température de consigne (Tc),
- soit pendant un temps inférieur au temps de montée "sous air" (tₐ) et au moins égal au temps de montée "sous vapeur" (tᵥ),
- effectuer une mesure de température, et
- déterminer si la température mesurée atteint ou non la susdite température de consigne, (T_{c}) de façon à indiquer si le capteur (18,50) se trouve ou non en présence de vapeur d'eau.

2. Dispositif de détection, dans un volume d'air à une température donnée, de la présence de vapeur d'eau caractérisé en ce qu'il comporte ;
- au moins un capteur de température (18,50) présentant deux temps de montée en température respectifs, à savoir un temps de montée en température (tᵥ), dit "sous vapeur d'eau", et un temps de montée en température (tₐ) dit "sous air", tels qu'ils lui permettent d'atteindre une température de consigne (T_{c}) déterminée inférieure à ladite température donnée, lorsqu'il se trouve respectivement en présence de vapeur d'eau et en présence d'air,
- soit des moyens aptes à créer, au voisinage du capteur de température (18,50), une zone soumise à une perte thermique telle que, lorsque le flux d'air est exempt de vapeur d'eau et vient en contact avec le capteur de température (18,50), celui-ci n'atteint pas la température de consigne (T_{c}) et lorsque le flux d'air contient une proportion de vapeur d'eau déterminée, ou proportion critique (P_{c}), le capteur de température (18,50) atteint ladite température de consigne (T_{c}),
- soit des moyens pour mettre le capteur de température (18,50) en présence dudit volume pendant un temps inférieur au temps de montée "sous air" (tₐ) et au moins égal au temps de montée "sous vapeur" (tᵥ),
- des moyens pour effectuer une mesure de température,
- des moyens pour déterminer si la température mesurée atteint ou non la susdite température de consigne (T_{c}), de façon à indiquer si le capteur (18,50) se trouve ou non en présence de vapeur d'eau.

3. Dispositif suivant la revendication 2 caractérisé en ce que le capteur (18,50) est disposé à proximité d'un orifice de sortie (54) d'une enceinte (42), alimentée en vapeur d'eau de façon à réaliser la détection de la vapeur lorsque celle-ci sort dudit orifice de sortie (54).

4. Dispositif suivant la revendication 3 caractérisé en ce que la zone soumise à une perte thermique est située à l'intérieur d'un tube (10,92) parcouru par ledit volume d'air, dont une extrémité est alimentée par ce dernier et l'autre extrémité est ouverte à l'air libre.

5. Générateur de vapeur d'eau comprenant une enceinte (2) dans laquelle on stocke de l'eau à vaporiser, des moyens de vaporisation (20) aptes à porter à l'ébullition l'eau contenue dans l'enceinte (2) et à délivrer, en sortie de celle-ci, un flux de gaz constitué de vapeur d'eau et/ou d'air, caractérisé en ce qu'il comporte:
- au moins un capteur de température (18) disposé sur le trajet de sortie du flux de vapeur, le capteur de température (18) possédant deux temps de montée en température respectifs à savoir un temps de montée en température (tᵥ) dit "sous vapeur d'eau" et un temps de montée en température (tₐ) dit "sous air", tels qu'ils lui permettent d'atteindre une température de consigne (T_{c}) déterminée, lorsqu'il se trouve respectivement en présence de vapeur d'eau et en présence d'air, et
- des moyens aptes à soumettre ledit flux de gaz en sortie du générateur, dans une zone située au voisinage du capteur de température (18), à une perte thermique, cette perte thermique étant telle que, lorsque le flux de gaz est exempt de vapeur d'eau, le capteur de température (18) n'atteint pas la température de consigne (T_{c}) et lorsque le flux d'air contient une proportion de vapeur d'eau déterminée, ou proportion critique (P_{c}), le capteur de température (18) atteint la dite température de consigne (T_{c}),
- des moyens de commande (26) des moyens de vaporisation (20), en relation avec le capteur (18) de façon à arrêter le fonctionnement des moyens de vaporisation (20) lorsque le capteur (18) atteint la température de consigne (T_{c}).

6. Générateur de vapeur suivant la revendication 5, caractérisé en ce que les moyens de vaporisation (20) sont aptes à produire un débit de vapeur suffisant pour chasser l'air contenu, notamment initialement, dans l'enceinte (2) en un temps inférieur au temps de montée en température (tₐ) "sous air" du capteur (18).

7. Générateur de vapeur suivant l'une des revendications 5 à 6 caractérisé en ce que la zone soumise à des pertes thermiques est située dans un tube (10) dont une extrémité est en communication avec ledit flux de gaz et l'autre extrémité est ouverte à l'air libre.

8. Four de cuisson à la vapeur d'eau comprenant une enceinte de cuisson (42) alimentée en vapeur d'eau par un générateur de vapeur (44), cette enceinte de cuisson (42) étant mise en communication avec l'atmosphère ambiante par au moins un orifice de sortie (54), caractérisé en ce qu'il comporte :
- au moins un capteur de température (50), disposé sur le trajet de sortie de gaz provenant dudit orifice (54), de façon qu'il soit en contact avec celui-ci lorsqu'il sort de l'enceinte (42), le capteur de température (50) présentant deux temps de montée en température respectifs, à savoir un temps de montée en température (tᵥ), dit "sous vapeur d'eau", et un temps de montée en température (tₐ) dit "sous air", pour atteindre une température de consigne (T_{c}) déterminée, lorsqu'il se trouve respectivement en présence de vapeur d'eau et en présence d'air,
- des moyens de commande des moyens de vaporisation (48), en relation avec le capteur (50), de façon à arrêter le fonctionnement du générateur de vapeur (44) lorsque le capteur (50) atteint la température de consigne (T_{c}).

9. Four suivant la revendication 8 caractérisé en ce qu'il comporte des moyens aptes à soumettre le flux de gaz sortant de l'enceinte (42), dans une zone située au voisinage du capteur de température (50), à une perte thermique, cette perte thermique étant telle que, lorsque le flux d'air est exempt de vapeur d'eau, le capteur de température (50) n'atteint pas la température de consigne (T_{c}) et lorsque le flux d'air contient une proportion de vapeur d'eau déterminée, ou proportion critique (P_{c}), le capteur de température atteint la dite température de consigne (T_{c}).

10. Four suivant l'une des revendications 8 ou 9 caractérisé en ce que le capteur de température (50) est disposé en aval de l'orifice de sortie (54) de l'enceinte de cuisson (42), dans une zone telle qu'il est soumis à des pertes thermiques.

11. Four suivant la revendication 10 caractérisé en ce que la zone soumise à des pertes thermiques est située dans un tube (50) dont une extrémité est en communication avec ledit orifice (54) et l'autre extrémité est ouverte à l'air libre.

12. Procédé pour déterminer la proportion de vapeur d'eau éventuellement contenue dans un mélange d'air et de vapeur d'eau à une température donnée déterminée, caractérisé en ce qu'il comporte les étapes consistant à :
- déterminer, pour au moins un domaine de températures de consigne déterminées, les temps de montée en température "sous vapeur" (tᵥ) et "sous air" (tₐ) d'au moins un capteur de température, c'est-à-dire les temps nécessaires pour lui permettre d'atteindre une température de consigne déterminée (T_{c}), lorsqu'il est successivement mis en contact avec de la vapeur d'eau et avec de l'air à ladite température donnée,
- mettre le capteur de température en présence dudit volume jusqu'à ce qu'il atteigne la température de consigne (T_{c}),
- déterminer le temps de montée en température (t) du capteur dans ledit mélange, et
- déterminer l'écart entre le temps de montée en température (t) mesuré par le capteur avec les temps de montée en température (tᵥ) "sous vapeur" et (tₐ) "sous air" dudit capteur, de façon à en déduire la proportion de vapeur contenue dans ledit volume d'air.

13. Dispositif pour déterminer le pourcentage en vapeur d'eau éventuellement contenu dans un mélange d'air et de vapeur d'eau à une température donnée déterminée, caractérisé en ce qu'il comporte au moins,
- un capteur de température présentant deux temps de montée en température respectifs à savoir un temps de montée en température (tᵥ), dit "sous vapeur d'eau", et un temps de montée en température (tₐ) dit "sous air", pour atteindre, une température de consigne déterminée (T_{c}) inférieure à ladite température donnée, lorsqu'il est respectivement en présence de vapeur d'eau et en présence d'air,
- des moyens pour mettre le capteur en présence dudit volume jusqu'à ce qu'il atteigne la température de consigne (T_{c})
- des moyens pour déterminer le temps de montée en température (t) du capteur dans ledit mélange, et
- des moyens pour - déterminer l'écart entre le temps de montée en température (t) mesuré par le capteur avec les temps de montée en température (tᵥ) "sous vapeur" et (tₐ) "sous air" dudit capteur, de façon à en déduire la proportion de vapeur contenue dans ledit volume d'air.

## Patentansprüche

1. Verfahren zum Nachweis des Vorhandenseins von Wasserdampf in einem Luftvolumen mit gegebener Temperatur, dadurch gekennzeichnet, daß es die folgenden Schritte umfaßt, die darin bestehen,
- in das Luftvolumen mindestens einen Temperaturfühler (18, 50) zu bringen, der zwei jeweilige Temperaturanstiegszeiten aufweist, und zwar eine Temperaturanstiegszeit (tᵥ), die "unter Wasserdampf" genannt wird, und eine Temperaturanstiegszeit (tₐ), die "unter Luft" genannt wird, in der Weise, daß sie ihm das Erreichen einer bestimmten Solltemperatur (T_{c}) gestatten, die unter der gegebenen Temperatur liegt, wenn er das Vorhandensein von Wasserdampf bzw. Luft anzeigt, wobei der Fühler (18, 50) in das Volumen gebracht wird, und zwar
- entweder in einem Bereich, der geeignet ist, einen Wärmeverlust zu erfahren, in der Weise, daß, wenn das Luftvolumen keinen Wasserdampf enthält, der Temperaturfühler (18, 50) die Solltemperatur (T_{c}) nicht erreicht, und wenn das Luftvolumen einen bestimmten oder kritischen Anteil (P_{c}) an Wasserdampf enthält, der Temperaturfühler (18, 50) die Solltemperatur (T_{c}) erreicht,
- oder während eines Zeitraums, der kürzer als die Temperaturanstiegszeit "unter Luft" (tₐ) und mindestens gleich der Temperaturanstiegszeit "unter Dampf" (tᵥ) ist,
- eine Temperaturmessung durchzuführen, und
- festzustellen, ob die gemessene Temperatur die Solltemperatur (T_{c}) erreicht oder nicht, um anzugeben, ob der Fühler (18, 50) um sich herum Wasserdampf aufweist oder nicht.

2. Vorrichtung zum Nachweis von Wasserdampf in einem Luftvolumen mit gegebener Temperatur, dadurch gekennzeichnet, daß es umfaßt:
- mindestens einen Temperaturfühler (18, 50), der zwei jeweilige Temperaturanstiegszeiten aufweist, und zwar eine Temperaturanstiegszeit (tᵥ), die "unter Wasserdampf" genannt wird, und eine Temperaturanstiegszeit (tₐ), die "unter Luft" genannt wird, in der Weise, daß sie ihm das Erreichen einer bestimmten Solltemperatur (T_{c}) erlauben, die unter der gegebenen Temperatur liegt, wenn er sich in Gegenwart von Wasserdampf bzw. Luft befindet,
- entweder Vorrichtungen, die geeignet sind, nahe dem Temperaturfühler (18, 50) einen Bereich zu schaffen, der einem Wärmeverlust unterzogen wird, in der Weise, daß, wenn der Luftstrom keinen Wasserdampf enthält und mit dem Temperaturfühler (18, 50) in Kontakt kommt, dieser die Solltemperatur (T_{c}) nicht erreicht, und wenn der Luftstrom einen bestimmten oder kritischen Anteil (P_{c}) an Wasserdampf enthält, der Temperaturfühler (18, 50) die Solltemperatur (T_{c}) erreicht,
- oder Vorrichtungen, mit denen der Temperaturfühler (18, 50) während eines Zeitraums, der kürzer ist als die Temperaturanstiegszeit "unter Luft" (tₐ) und mindestens gleich der Temperaturanstiegszeit "unter Dampf" (tᵥ), dem Volumen ausgesetzt wird,
- Vorrichtungen zur Durchführung einer Temperaturmessung,
- Vorrichtungen, um festzustellen, ob die gemessene Temperatur die Solltemperatur (T_{c}) erreicht oder nicht, um anzugeben, ob sich der Fühler (18, 50) in Gegenwart von Wasserdampf befindet oder nicht.

3. Vorrichtung nach Anspruch 2, dadurch gekennzeichnet, daß der Temperaturfühler (18, 50) nahe einer Austrittsöffnung (54) einer Kammer (42) angeordnet ist, die mit Wasserdampf gespeist wird, um den Nachweis des Dampfes zu führen, wenn dieser aus der Austrittsöffnung (54) austritt.

4. Vorrichtung nach Anspruch 3, dadurch gekennzeichnet, daß sich der Bereich, der einem Wärmeverlust unterzogen wird, im Innern eines Rohrs (10, 92) befindet, durch das das Luftvolumen zirkuliert, dessen eines Ende mit diesem gespeist wird und dessen anderes Ende nach draußen offen ist.

5. Dampferzeuger umfassend einen Behälter (2), in dem zu verdampfendes Wasser gelagert wird, Dampfbildungsvorrichtungen (20), die geeignet sind, das in dem Behälter (2) enthaltene Wasser zum Sieden zu bringen und am Ausgang desselben einen aus Wasserdampf und/oder Luft bestehenden Gasstrom zu liefern, dadurch gekennzeichnet, daß er umfaßt:
- mindestens einen Temperaturfühler (18), der auf dem Austrittsweg des Dampfstroms angeordnet ist, wobei der Temperaturfühler (18) zwei jeweilige Temperaturanstiegszeiten besitzt, und zwar eine Temperaturanstiegszeit (tᵥ), die "unter Wasserdampf" genannt wird, und eine Temperaturanstiegszeit (tₐ), die "unter Luft" genannt wird, in der Weise, daß sie ihm erlauben, eine bestimmte Solltemperatur (T_{c}) zu erreichen, wenn er sich jeweils in Gegenwart von Wasserdampf bzw. Luft befindet, und
- Vorrichtungen, die geeignet sind, den aus dem Generator austretenden Gasstrom in einem Bereich nahe dem Temperaturfühler (18) einem Wärmeverlust zu unterziehen, wobei dieser Wärmeverlust derart ist, daß der Temperaturfühler (18), wenn der Gasstrom keinen Wasserdampf enthält, die Solltemperatur (T_{c}) nicht erreicht, und wenn der Luftstrom einen bestimmten oder kritischen Anteil (P_{c}) an Wasserdampf enthält, der Temperaturfühler (18) die Solltemperatur (T_{c}) erreicht,
- Vorrichtungen zum Steuern (26) der Dampfbildungsvorrichtungen (20), in Zusammenhang mit dem Fühler (18), um den Betrieb der Dampfbildungsvorrichtungen (20) zu unterbrechen, wenn der Fühler (18) die Solltemperatur (T_{c}) erreicht.

6. Dampferzeuger nach Anspruch 5, dadurch gekennzeichnet, daß die Dampfbildungsvorrichtungen (20) geeignet sind, eine ausreichende Dampfmenge zu produzieren, um die insbesondere anfangs in dem Behälter (2) enthaltene Luft in einem Zeitraum herauszuspülen, der unter der Temperaturanstiegszeit (tₐ) "unter Luft" des Fühlers (18) liegt.

7. Dampferzeuger nach einem der Ansprüche 5 bis 6, dadurch gekennzeichnet, daß der Bereich, der Wärmeverlusten unterzogen wird, in einem Rohr (10) angeordnet ist, dessen eines Ende mit dem Gasstrom verbunden ist und dessen anderes Ende nach draußen offen ist.

8. Wasserdampfbrennofen, der eine Brennkammer (42) umfaßt, die von einem Dampferzeuger (44) mit Wasserdampf gespeist wird, wobei diese Brennkammer (42) über mindestens eine Austrittsöffnung (54) mit der Umgebungsluft verbunden ist, dadurch gekennzeichnet, daß er umfaßt:
- mindestens einen Temperaturfühler (50), der auf dem Austrittsweg von aus der Öffnung (54) kommendem Gas angeordnet ist, in der Weise, daß er mit diesem in Kontakt kommt, wenn er aus der Kammer (42) austritt, wobei der Temperaturfühler (50) zwei jeweilige Temperaturanstiegszeiten aufweist, und zwar eine Temperaturanstiegszeit (tᵥ), die "unter Wasserdampf" genannt wird, und eine Temperaturanstiegszeit (tₐ), die "unter Luft" genannt wird, um eine bestimmte Solltemperatur (T_{c}) zu erreichen, wenn er sich jeweils in Gegenwart von Wasserdampf bzw. Luft befindet,
- Vorrichtungen zum Steuern der Dampfbildungsvorrichtungen (48), in Zusammenhang mit dem Fühler (50), um den Betrieb des Dampferzeugers (44) zu unterbrechen, wenn der Fühler (50) die Solltemperatur (T_{c}) erreicht.

9. Ofen nach Anspruch 8, dadurch gekennzeichnet, daß er Vorrichtungen umfaßt, die geeignet sind, den aus der Kammer (42) austretenden Gasstrom in einem Bereich nahe dem Temperaturfühler (50) einem Wärmeverlust zu unterziehen, wobei dieser Wärmeverlust derart ist, daß der Temperaturfühler (50), wenn der Gasstrom keinen Wasserdampf enthält, die Solltemperatur (T_{c}) nicht erreicht, und wenn der Luftstrom einen bestimmten oder kritischen Anteil (P_{c}) an Wasserdampf enthält, der Temperaturfühler (50) die Solltemperatur (T_{c}) erreicht.

10. Ofen nach einem der Ansprüche 8 oder 9, dadurch gekennzeichnet, daß der Temperaturfühler (50) der Austrittsöffnung (54) der Brennkammer (42) nachgeordnet in einem Bereich angeordnet ist, daß er Wärmeverlusten ausgesetzt ist.

11. Ofen nach Anspruch 10, dadurch gekennzeichnet, daß sich der Wärmeverlusten ausgesetzte Bereich in einem Rohr (50) befindet, dessen eines Ende mit der Öffnung (54) verbunden ist und dessen anderes Ende nach draußen offen ist.

12. Verfahren zum Bestimmen des Wasserdampfanteils, der eventuell in einem Luft-Wasserdampf-Gemisch mit einer bestimmten gegebenen Temperatur enthalten ist, dadurch gekennzeichnet, daß es folgende Schritte aufweist, die darin bestehen,
- die Temperaturanstiegszeiten "unter Dampf" (tᵥ) und "unter Luft" (tₐ) für mindestens einen Bereich von festgelegten Solltemperaturen mindestens eines Temperaturfühlers zu bestimmen, d.h. die Zeiten, die erforderlich sind, um ihm das Erreichen einer bestimmten Solltemperatur (T_{c}) zu gestatten, wenn er bei der gegebenen Temperatur nacheinander mit Wasserdampf und mit Luft in Kontakt gebracht wird,
- den Temperaturfühler dem Volumen auszusetzen, bis er die Solltemperatur (T_{c}) erreicht,
- die Temperaturanstiegszeit (t) des Temperaturfühlers in dem Gemisch zu bestimmen, und
- die Abweichung zwischen der von dem Temperaturfühler gemessenen Temperaturanstiegszeit (t) und den Temperaturanstiegszeiten (tᵥ) "unter Dampf" und (tₐ) "unter Luft" des Fühlers festzustellen, um daraus den in dem Luftvolumen enthaltenen Dampfanteil abzuleiten.

13. Vorrichtung zur Bestimmung des prozentualen Gehalts an Wasserdampf, der eventuell in einem Luft-Wasserdampf-Gemisch enthalten ist, bei einer bestimmten gegebenen Temperatur, dadurch gekennzeichnet, daß sie mindestens umfaßt:
- einen Temperaturfühler mit zwei jeweiligen Temperaturanstiegszeiten, und zwar einer Temperaturanstiegszeit (tᵥ), die "unter Wasserdampf" genannt wird, und einer Temperaturanstiegszeit (tₐ), die "unter Luft" genannt wird, um eine bestimmte Solltemperatur (T_{c}) zu erreichen, die unter der gegebenen Temperatur liegt, wenn er sich jeweils in Gegenwart von Wasserdampf bzw. Luft befindet,
- Vorrichtungen, mit denen der Fühler dem Volumen ausgesetzt wird, bis er die Solltemperatur (T_{c}) erreicht,
- Vorrichtungen zur Bestimmung der Temperaturanstiegszeit (t) des Fühlers in dem Gemisch, und
- Vorrichtungen zur Bestimmung der Abweichung zwischen der von dem Temperaturfühler gemessenen Temperaturanstiegszeit (t) und den Temperaturanstiegszeiten (tᵥ) "unter Dampf" und (tₐ) "unter Luft" des Fühlers, um daraus den in dem Luftvolumen enthaltenen Dampfanteil abzuleiten.

## Claims

1. Process for detecting the presence of steam in a volume of air at a given temperature, characterized in that it comprises the steps consisting in:
- bringing into the presence of said volume of air at least one temperature sensor (18, 50) presenting two respective temperature-rise times, namely a so-called «under steam» temperature rise time (tᵥ) and a so-called «under air» temperature rise time (tₐ) such that they make it possible to attain a determined reference temperature (T_{c}) less than said given temperature, when it is respectively located in the presence of steam and in the presence of air, the sensor (18, 50) being placed in the presence of said volume
- either in a zone adapted to undergo a heat loss such that when said volume of air is exempt of steam, the temperature sensor (18, 50) does not attain the reference temperature (T_{c}) and when said volume of air contains a determined proportion of steam, or critical proportion (P_{c}) the temperature sensor (18, 50) attains said reference temperature (T_{c})
- or during a time less than the «under air» rise time (tₐ) and at least equal to the «under steam» rise time (tᵥ),
- effecting a measurement of temperature, and
- determining whether or not the measured temperature attains said reference temperature (T_{c}) so as to indicate whether or not the sensor (18, 50) is located in the presence of steam.

2. Device for detecting the presence of steam in a volume of air at a given temperaure, characterized in that it comprises:
- at least one temperature sensor (18, 50) presenting two respective temperature rise times, namely a so-called «under steam» temperature rise time (tᵥ) and a so-called «under air» temperature rise time (tₐ) such that they enable it to attain a determined reference temperature (T_{c}) less than said given temperature, when it is respectively located in the presence of steam and in the presence of air,
- either means adapted to create, in the vicinity of the temperature sensor (18, 50), a zone subjected to a heat loss such that, when the air flux is exempt of steam and comes into contact with the temperature sensor (18, 50), the latter does not attain the reference temperature (T_{c}) and when the air flux contains a determined proportion of steam, or critical proportion (P_{c}) the temperature sensor (18; 50) attains said reference temperature (T_{c})
- or means for placing the temperature sensor (18, 50) into the presence of said volume during a time less than the «under air» rise time (tₐ) and at least equal to the «under steam» rise time (tᵥ)
- means for effecting a measurement of temperature,
- means for determining whether or not the measured temperature attains said reference temperature (T_{c}) so as to indicate whether or not the sensor (18, 50) is in the presence of steam.

3. Device according to Claim 2, characterized in that the sensor (18, 50) is disposed in the vicinity of an outlet orifice (54) of an enclosure (42), supplied with steam so as to effect detection of the steam when the latter emerges from said outlet orifice (54).

4. Device according to Claim 3, characterized in that the zone subjected to a heat loss is located inside a tube (10, 92) through which said volume of air passes, of which one end is supplied by the latter and the other end is open to the free air.

5. Steam generator comprising an enclosure (2) in which is stored the water to be vaporized, vaporization means (20) adapted to take to boiling point the water contained in the enclosure (2) and to deliver, at the outlet thereof, a gas flow constituted by steam and/or air, characterized in that it comprises:
- at least one temperature sensor (18) disposed on the outlet path of the steam flow, the temperature sensor (18) presenting two respective temperature rise times, namely a so-called «under steam» temperature rise time (tᵥ) and a so-called «under air» temperature rise time (tₐ) such that they enable it to attain a determined reference temperature (T_{c}) when it is respectively in the presence of steam and in the presence of air, and
- means adapted to subject said flow of gas leaving the generator, in a zone located near the temperature sensor (18), to a heat loss, such heat loss being such that, when the flow of gas is exempt of steam, the temperature sensor (18) does not attain the reference temperature (T_{c}) and when the flow of air contains a determined proportion of steam, or critical proportion (P_{c}), the temperature sensor (18) attains said reference temperature (T_{c})
- means (26) for controlling the vaporization means (20), in relation with the sensor (18) so as to stop operation of the vaporization means (20) when the sensor (18) attains the reference temperature (T_{c}).

6. Steam generator according to Claim 5, characterized in that the vaporization means (20) are adapted to produce a sufficient flow rate of steam to drive out the air contained, particularly initially; in the enclosure (2) in a time less than the «under air» temperature rise time (tₐ) of the sensor (18).

7. Steam generator according to one of Claims 5 to 6, characterized in that the zone subjected to heat losses is located in a tube (10) of which one end is in communication with said gas flow and the other end is open to the free air.

8. Steam baking oven, comprising a baking enclosure (42) supplied with steam by a steam generator (44) , this baking enclosure (42) being placed in communication with the ambient atmosphere by at least one outlet orifice (54), characterized in that it comprises:
- at least one temperature sensor (50), disposed on the outlet path of gas coming from said orifice (54), so that it is in contact therewith when it emerges from the enclosure (42), the temperature sensor (50) presenting two respective temperature rise times, namely a so-called "under steam" temperature rise time (tᵥ) and a so-called "under air" temperature rise time (tₐ) in order to attain a determined reference temperature (T_{c}) when it is respectively located in the presence of steam and in the presence of air;
- means for controlling the vaporization means (48), in relation with the sensor (50), so as to stop operation of the steam generator (44) when the sensor (50) attains the reference temperature (T_{c})

9. Oven according to Claim 8, characterized in that it comprises means adapted to subject the flow of gas leaving the enclosure (42), in a zone located in the vicinity of the temperature sensor (50), to a heat loss, such heat loss being such that, when the flow or air is exempt of steam, the temperature sensor (50) does not attain the reference temperature (T_{c}) and when the air flow contains a determined proportion of steam, or critical proportion (P_{c}), the temperature sensor attains said reference temperature (T_{c}).

10. Oven according to one of Claims 8 or 9, characterized in that the temperature sensor (50) is disposed downstream of the outlet orifice (54) of the baking enclosure (42), in a zone such that it is subjected to heat losses.

11. Oven according to Claim 10, characterized in that the zone subjected to heat losses is located in a tube (50) of which one end is in communication with said orifice (54) and the other end is open to the free air.

12. Process for determining the proportion of steam possibly contained in a mixture of air and of steam at a determined given temperature, characterized in that it comprises the steps consisting in:
- determining, for at least one domain of determined reference temperatures, the «under steam» (tᵥ) and «under air» (tₐ) temperature rise times of at least one temperature sensor, i.e. the times necessary to allow it to attain a determined reference temperature (T_{c}) when it is successively placed in contact with steam and with air at said given temperature,
- placing the temperature sensor in the presence of said volume until it attains the reference temperature (T_{c}),
- determining the temperature rise time (t) of the sensor in said mixture, and
- determining the difference between the temperature rise time (t) measured by the sensor with the «under steam» (tᵥ) and «under air» (tₐ) temperature rise times of said sensor, so as to deduce therefrom the proportion of steam contained in said volume of air.

13. Device for determining the percentage of steam possibly contained in a mixture of air and of steam at a determined given temperature, characterized in that it comprises at least
- a temperature sensor presenting two respective temperature rise times, namely a so-called «under steam» temperature rise time (tᵥ) and a so-called «under air» temperature rise time (tₐ), to attain a determined reference temperature (T_{c} ) less than said given temperature, when it is respectively in the presence of steam and in the presence of air,
- means for placing the sensor in the presence of said volume until it attains the reference temperature (T_{c}),
- means for determining the temperature rise time (t) of the sensor in said mixture, and
- means for determining the difference between the temperature rise time (t) measured by the sensor with the «under steam» (tᵥ) and «under air» (tₐ) temperature rise times of said sensor, so as to deduce therefrom the proportion of steam contained in said volume of air.
